# EUROPEAN PATENT SPECIFICATION

(11) **EP 4 244 096 B1**
(45) Date of publication and mention of the grant of the patent: **07.01.2026**
(21) Application number: 20808083.8
(22) Date of filing: 16.11.2020
(51) Int. Cl.: B60P 1/28

(54) **A DUMP BOX ARRANGEMENT FOR A VEHICLE, A DUMP BOX, AND A MINING VEHICLE**
KIPPMULDENANORDNUNG FÜR EIN FAHRZEUG, KIPPMULDE UND BERGBAUFAHRZEUG
AGENCEMENT DE BENNE DE DÉCHARGEMENT POUR UN VÉHICULE, BENNE DE DÉCHARGEMENT ET VÉHICULE POUR EXPLOITATION MINIÈRE

(43) Date of publication of application: 20.09.2023
(73) Proprietor: Sandvik Mining and Construction Oy, 33330 Tampere (FI)
(72) Inventor: VUOKILA, Marko, 33330 Tampere (FI); TAMMINEN, Pekka, 33330 Tampere (FI); SUNDBERG, Pia, 33330 Tampere (FI)
(74) Representative: Sandvik
(86) International application number: PCT/EP2020/082231
(87) International publication number: WO 2022/100864

(56) References cited:
- EP-A1- 0 125 115
- EP-A1- 3 359 746
- EP-A1- 3 527 425
- EP-B1- 3 359 746
- FR-A1- 2 944 488
- FR-A5- 2 151 147
- US-A- 3 827 753

## Description

### FIELD OF THE INVENTION

The invention relates to a dump box arrangement for a vehicle, such as a mining vehicle. The invention relates also to a dump box. Further, the invention relates to a mining vehicle.

### BACKGROUND OF THE INVENTION

Machines such as haul trucks or haul machines are used in various industries to transport or move material from one location to another.

Truck boxes or dumb boxes are commonly used, e.g., for hauling material in the mining industry. Dumb boxes of mining vehicles are used in mining applications to carry material from a loading location to a different location where the material is dumped. Dumb boxes are mounted to the vehicles to hold the material during transit. These dumb boxes are tilted upward to dump the material. Dumb boxes of this type are commonly loaded using excavators, loaders, and the like.

In many applications, material tends to stick to the inside of the dumb box when the operator tilts the dumb box to dump the material. The material that remains within the dumb box after it has been dumped is called "carryback" (e.g., because the dumb box is not fully unloaded and this stuck material is "carried back" to the loading location with the otherwise empty dumb box). Interactions between the material being hauled and the dumb box interior also can result in sticking or carryback problems. A complicated shape of the dumb box can exacerbate the carryback problem. For example, in embodiments in which low height of a vehicle with a dump box is a must, like in mining applications, the shape of the dump box can be complicated. In mining vehicles wheel sizes can be rather large and this may affect to shapes of the dump boxes. In some embodiments surface of the dump box may comprise also casing structures for the vehicle wheels.

Previously worst cases with the carryback problem have been tried to solve for example with an ejector box, emptying the box with an excavator, or by washing. A drawback of the ejector box is that it is smaller than a normal box and therefore the efficiency of transferring loads is worsened. A drawback of emptying the box with the excavator is that the excavator can damage the box as there is excess wear. A drawback of washing the box is that at the operation sites, e.g. at the mine sites, there might not be enough of water for washing the box. Document EP 0 125 115 A1 discloses a dump box arrangement according to the preamble of claim 1.

### OBJECTIVE OF THE INVENTION

The objective of the invention is to alleviate the disadvantages mentioned above.

### SUMMARY OF THE INVENTION

According to a first aspect, the present invention provides a dump box arrangement of a dump box for releasing possible stuck material from the dump box, the dump box comprising an interior surface defined by a configuration of a lower surface, opposite sidewalls, and a front wall.

According to the invention the dump box arrangement comprises a movable surface part arranged on the interior surface of the dump box or forming a portion of the interior surface, and that the movable surface part is arranged movably in interior of the dump box from a first position to a second position at least when the dump box is tipped.

According to second aspect the present invention provides a dump box for a vehicle. The dump box comprises a dump box arrangement for for releasing possible stuck material from the dump box.

According to third aspect the present invention provides a mining vehicle. The mining vehicle comprises a dump box comprising a dump box arrangement for releasing possible stuck material from the dump box.

The technical effect is that by arranging a movable surface part on the interior of the dump box movable to a first position to the second position according to movements of the dumb box, at least when the dump box is tipped, and possible stuck material releases from the dump box interior. This means that amount of "carryback" material decreases and a transport efficiency of material increases with the dump box comprising the arrangement according to the disclosure.

The dump box arrangement, the dump box and the mining vehicle are characterized by what is stated in the independent claim.

In an embodiment of the dump box arrangement comprises further a support part arranged between structures of the dump box and the movable surface part for operatively engaging the movable surface part to the structures of the dump box. An advantage for this is that the movable surface part can be arranged to a suitable position of the dump box. It may be a retrofit to an existing dump box of may be arranged as a feature of the new dump box.

According to the invention a first end of the support part is arranged to be connected to a dump box structures on a level that is a distance upwards in a vertical direction from a level of the movable surface part, and the movable support part is arranged to be connected to a second end of the support part. An advantage for this is that the arrangement allows suitable working principle of the arrangement. The arrangement may be used by gravitation in accordance with the movements of the dump box.

In an embodiment of the arrangement the movable surface part may be configured to be arranged in a first position in a corner area or near a corner area of the interior of the dump box, for example a corner area of the lower surface and a wall extending upwards from a lower surface. An advantage for this is that material that easily stuck to corner areas of the dump box now gathers on the movable surface part. Material can easily be released from the dump box by moving the movable surface part. This decreases effectively "carryback" of the material.

In an embodiment of the arrangement the support part may comprise one or more of the following: plate part, bar part, pipe part, band part, chain part, wire part, rope part, wire rope part, or spring part. This gives plenty of options for different embodiments of the arrangement.

In an embodiment of the arrangement the support part may be arranged movably on the dump box structures. Relating to the embodiment and needs of the user the arrangement may be arranged to be movable by a movable support member. In an embodiment of the arrangement the support part may be arranged pivotally movable on the dump box structures with a joint, for example with a hinge. An advantage for this is that a direction of the movement of the support part can be controlled by a pivot joint. This may be, for example, parallel to a pivot axis of the dump box during tipping of the dump box.

In an embodiment of the arrangement the movable surface part may be arranged pivotally movable on the support part with a joint, for example with a second hinge. An advantage for this is that the surface part may be arranged to reach to contact and sweep the interior surface of the dump box during movement from the first position to the second position. A contact of the movable surface part to different dump box interior surfaces may be adapted with the pivotally movable joint between support part and the movable surface member. Furthermore, a suitable position adjacent to the lower surface may be achieved in a first position to a first portion of the movable surface part.

In an embodiment of the arrangement the movable surface part may be arranged movably from the first position to the second position by gravity, in accordance with the dump box movement, such as with the tipping movement. An advantage of this is that no further actuators or complicated mechanisms are needed for an operation of the arrangement. The arrangement may simply be arranged movable according to movements of the dump box, for example when tipping the dump box. The movable surface part may be arranged to move back from the second position to the first position when the dump box is moved back, i.e. lowered, to a hauling position from the tipping position.

In an embodiment of the arrangement a moving device, an actuator, or a biasing device, such as a spring device, may be arranged to enhance movement of the movable surface part from the first position to the second position. An advantage for this is that a movement for the arrangement may be achieved also independently in relation to movement of the dump box. This may also secure the movement of the movable surface part from the first position to the second position and back from the second position to the first position. The actuator according to the invention is arranged to vibrate the movable surface part to enhance the releasing of the material from the dump box.

In an embodiment of the arrangement the support part may be a rigid part, or the support part may be a flexible part. An advantage of the support part being a rigid part that a distance from the first end of the support part to the second end of the support part and further to the movable surface part may be kept as pre-determinated. An advantage of the support part being a flexible part that the arrangement may be constructed as a simple structure. This may be made for example by connecting of the movable surface part and support part or support members without hinges.

In an embodiment of the arrangement the arrangement may comprise a plurality of support parts or support members and/or movable surface parts (51). An advantage for this is that it allows multiple different configurations for different types of dump boxes or different positions in the dump box. A further advantage is that this allows easy modifications of the arrangement.

In an embodiment of the dump box for a vehicle is that in the first position the movable surface part may be arranged to cover an opening of the interior surface of the dump box and in the second position of the movable surface part the opening of the interior surface of the dump box is open i.e. not covered. An advantage for this is that an opening in the interior surface of the dump box may enhance removal of material from the dump box when the movable surface part is in the second position i.e. not covering the opening.

The invention and its embodiments may be utilised with hauling vehicles in general and specifically with mining vehicles.

It is to be understood that the aspects and embodiments of the invention described above may be used in any combination with each other.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Figure 1** is a schematic representation of a side view of an embodiment of a vehicle with a dump box in a first position,
**Figure 2** is a schematic representation of a side view of an embodiment of a vehicle with a dump box in a second, tilted position, in a dump position,
**Figure 3** is a schematic representation of an embodiment a dump box with an embodiment of a dump box carry back prevention arrangement in a first position,
**Figure 4** is a schematic representation of a longitudinal cross section along line IV-IV of Figure 3 of an embodiment of a dump box with an embodiment of a dump box carry back prevention arrangement in a first position,
**Figure 5** is a schematic representation of a longitudinal cross section along line IV-IV of Figure 3 of an embodiment of a dump box with an embodiment of a dump box carry back prevention arrangement in a tilted position between first and second positions,
**Figure 5a** is a schematic representation of detail A of Figure 5,
**Figure 6** is a schematic representation of a longitudinal cross section along line IV-IV of Figure 3 of an embodiment of a dump box with an embodiment of a dump box carry back prevention arrangement in a second position, a tilted position,
**Figure 7** is a schematic representation of a longitudinal cross section along line IV-IV of Figure 3 of an embodiment of a dump box with a second embodiment of a dump box carry back prevention arrangement in a first position, and
**Figure 8** is a schematic representation of a longitudinal cross section along line IV-IV of Figure 3 of an embodiment of a dump box with a second embodiment of a dump box carry back prevention arrangement in a second position, a tilted position.

In the figures, some embodiments are shown simplified for the sake of clarity. Similar parts are marked with the same reference numbers in the figures.

### DETAILED DESCRIPTION

The mining vehicle may be a mine machine or a construction machine, and may be e.g. a loader, a transport vehicle, a loading machine or hauling machine or a dump vehicle. The mining vehicle may operate in an autonomous, a semi-autonomous, or a manual manner to move material from one location at the work site to another location at the work site or to a further location at a location remote from the work site. Work site may be a portion of, for example, a mine site, a construction site, a road work site, a landfill, a quarry, a forest, or any other type of site.

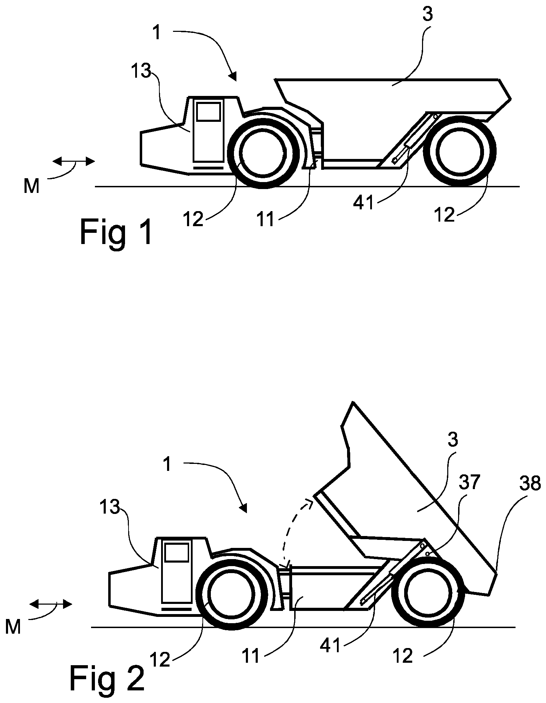

A diagrammatic illustration of a mining vehicle 1 for hauling or transporting material is depicted in figures 1 and 2. The mining vehicle 1 includes a frame 11, and a prime mover such as engine operatively connected to drive wheels 12 to propel the machine. The mining vehicle 1 may use any type of machine propulsion and drivetrain mechanisms including hydrostatic, electric, or a mechanical drive. The vehicle 1 may include a cab 13 that an operator may physically occupy and provide input to control the machine. Cab 13 may include one or more input devices (not shown) through which the operator may issue commands to control the propulsion and steering of the machine as well as dump a dump body 3. In an embodiment the vehicle 1 may be without a cab i.e. a cabless vehicle, for example when the vehicle is an autonomous moving vehicle.

In the following an expression "a dump box" is used, but it can be any one of the following: a truck box or a payload container or a dump body or a dump box or a bed or a tray.

A dump box 3 may be pivotally mounted on the frame 11 and configured to carry material. The dump box may be arranged to the frame 11 and configured to pivot in relation to a pivot axis 37.

An interior surface 31 of the dump box 3 may have one of many different configurations. The interior surface 31 may be defined by a configuration of a lower surface 32, opposite sidewalls 33, 34, and a front wall 35. Actuators 41, such as hydraulic cylinders may extend between the frame 11 and the dump body 3. The actuators may be actuated to tip the dump box to dump material from the dump box 3 as desired. In an embodiment of Fig 1 the dump box is in a first position, i.e. in a hauling position. In an embodiment of Fig 2 the dump box is in a second position, i.e. in a dumping position. In an embodiment of Fig 2 the dump box may be arranged to pivot in relation to a pivot axis 37 that may be arranged in a cross direction of a main moving direction M of the vehicle 1. Then the material may be dumped from a rear part 38 of the dump box 3. In an another embodiment the pivot axis may be parallel to a main moving direction M of the vehicle. Then the material may be dumped from a side wall side of the dump box by tipping the dump box by pivoting it in relation to the pivot axis.

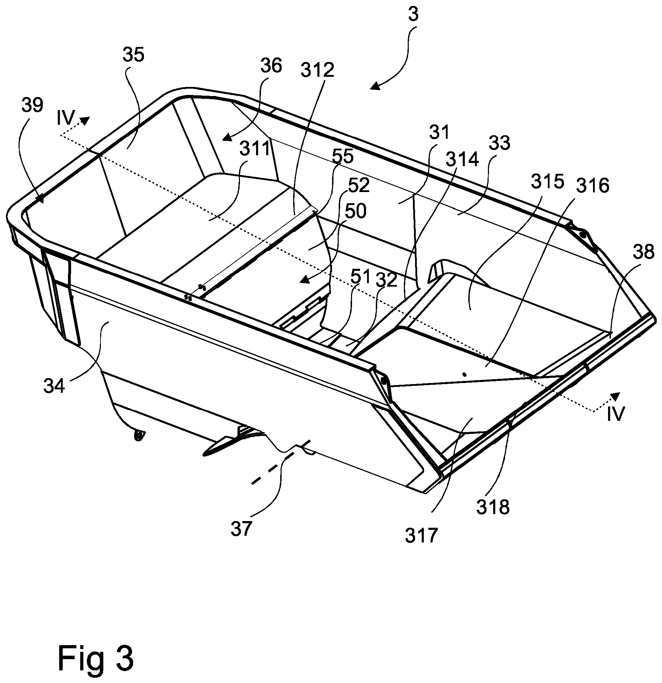

A shape of the dump box may be arranged according to the embodiment. In an embodiment of Fig 3 the dumb box may have interior shape defined for example by the vehicle and its intended use. For example, vehicle wheels and a space requirement for the wheels may limit the dump box payload space. Furthermore, a height of the dump box may be limited especially in an underground mining environment. This may result to rather complicated dump box interiors when optimizing the space for the payload of the dump box. In an embodiment of Fig 3 the dumb box 3 may be intended for a use of a dump box of a mining vehicle. In an embodiment a lower surface 32 of the interior surface 31 of the dump box 3 may be arranged on a middle part 40 of the dump box. The lower surface 32 may be extending on a width of the dump box. The middle part 40 may be arranged between a front portion 36 and the rear part 38 of the dump box 3. From a front side of the lower surface 32 may be arranged a wall 312 extending to mainly vertical direction from the lower surface 32. An edge portion 313 may be arranged between the lower surface 32 and the wall 312. The wall 312 may be arranged extend a part of the height of the dump box. The wall 312 may be arranged to extend on a width of the dump box between the side walls 33, 34. An upper end of the wall 312 may be arranged to extend as a mainly horizontal wall portion 311 extending to a front wall 35 of the dump box. To a rear side of the lower surface 32 may be arranged a casing type structures, for example "wings", for vehicle wheels. In an embodiment inclined surface portions 314 extending towards the rear end 38 of the dump box may be arranged from rear side of the lower surface 32. The inclined surface portions 314 may be extending as horizontal surface portions 315 towards a rear surface 318 and the rear end 38. Each inclined surface portions 314 and horizontal surface portions 315 may be arranged to extend to the side wall of the dump box. Between the inclined surface portions 314 extending as horizontal surface portions 315 towards the rear end 38 of the dump box may be arranged a central surface portion 317 extending from the rear side of the lower surface 32 towards the rear end 38 of the dump box. The central surface portion 317 may be arranged as a less inclined surface compared to inclined surface portions 314. Between the central surface portion 317 and each inclined surface portions 314 extending as horizontal surface portions 315 may be arranged a wall 316. The central surface portion may be arranged to extend between walls 316 of the casing type structures, i.e. "wings". The central surface portion 317 may be arranged to form a corridor between the walls 316 of the casing type structures, i.e. "wings" towards the rear surface 318 and the rear end 38 of the dump box.

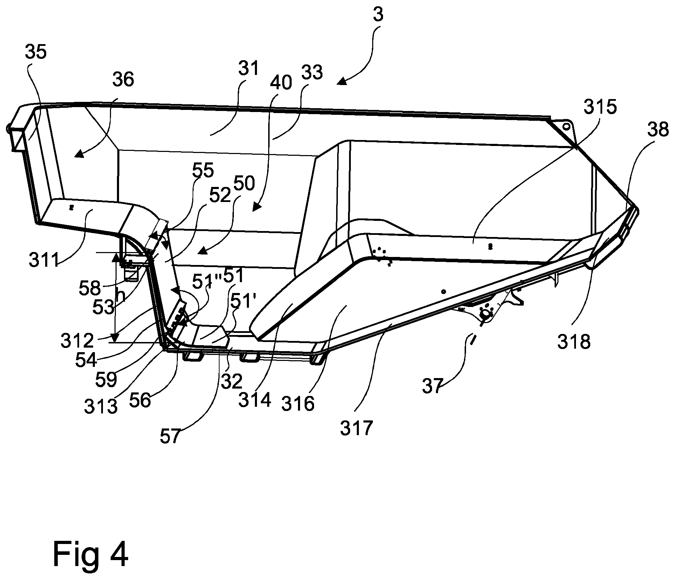

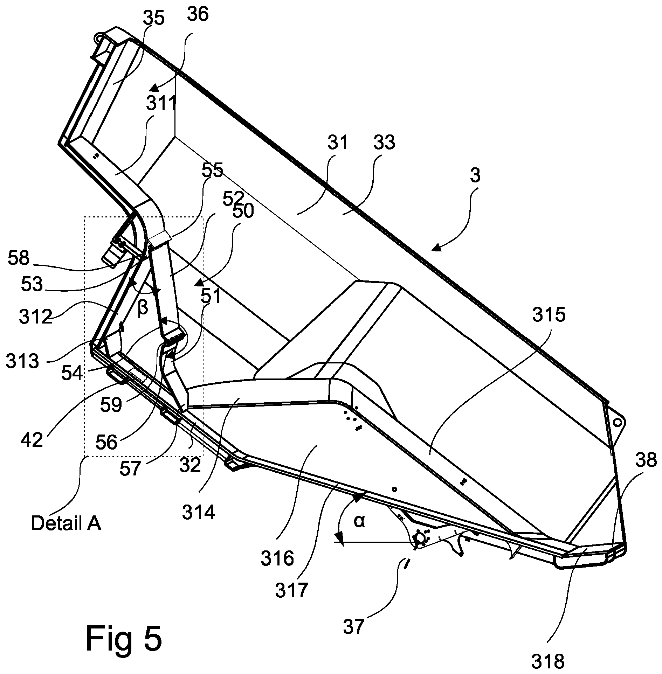

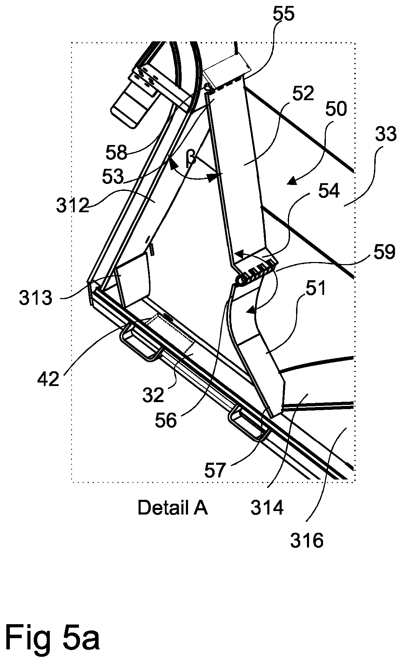

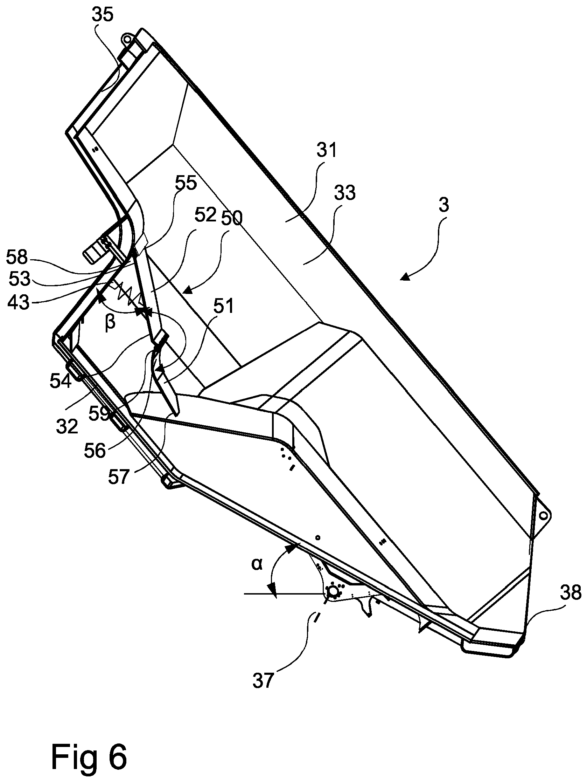

In an embodiment of the invention an arrangement 50 for releasing material i.e. so-called carryback from the interior 31 of the dump box is arranged with the dump box 3. The dump box arrangement for releasing material i.e. so-called carryback from the interior 31 of the dump box may comprise a movable surface part 51 arranged on the interior surface of the dump box or forming a portion of the interior surface. The movable surface part 51 may be arranged movably in interior of the dump box from a first position to a second position. In an embodiment the movable surface part is arranged movably from a first position to a second position in accordance with the movement of the dump box. In an embodiment the movable surface part is arranged movably from a first position to a second position when the dump box is tipped. Some embodiments of the arrangement have been illustrated in Fig 4, Fig 5, Fig 5a and Fig 6. In Fig 4 the dump box 3 is in a hauling position and the movable surface part 51 is in a first position. In Fig 6 the dump box is in a tipping position and the movable surface part is in the second position. Figures 5 and 5a illustrate a position between the first position and the second position of the movable surface part 51. In an embodiment of the arrangement 50 for releasing material form the interior of the dump box may comprise a movable surface part 51, and a support part 52. In an embodiment the support part 52 and the movable surface part 51 may be made from several members, or they may be arranged to a one-piece arrangement. The movable surface part 51 may be arranged to a second end 54 of the support part 52. A first end 53 of the support part 52 may be arranged on a dump box 3 structures. In an embodiment the first end 53 of the support part 52 may be arranged on the interior surface 36 of the dump box 3. A first end 56 of the movable surface part 51 may be arranged on the second end 54 of the support part 52. In an embodiment the support part 52 may be a plate part. In an embodiment the movable surface part 51 may be a plate part. In an embodiment the arrangement 50 may be arranged pivotally supported on a dump box structures. In an embodiment the arrangement 50 may be arranged to pivot in relation to an axis 55 that is at a distance from the pivot axis 37 of the dump box. In an embodiment the arrangement 50 may be arranged to pivot in relation to an axis 55 that is parallel to the pivot axis 37 of the dump box.

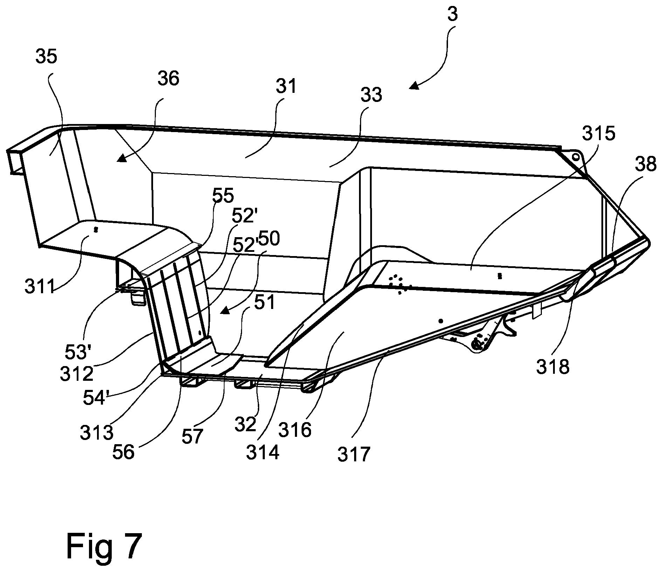

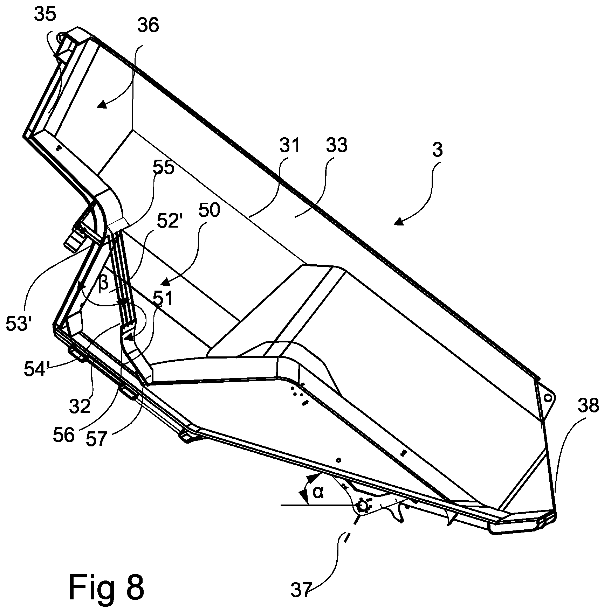

In an embodiment the support part 52 may be configured from a plurality of support members 52'. One such an embodiment is illustrated in Figs 7 and 8. In an embodiment the support part 52 may comprise at least one stiff support member. In an embodiment the support part may comprise at least one flexible or bendable support member. In an embodiment the support part 52 may comprise a band member or a chain member or a wire rope member. In an embodiment the support part may comprise a plurality of flexible or bendable support members 52', such as band members, chain members, wire members and/or wire rope members.

In an embodiment a joint, such as a hinge 58 may be arranged on the first end 53 of the support part connecting to arrangement 50 pivotally to the structures of the dump box 3. In an embodiment the hinge 58 may be connected to the structures of the dump box 3 by welding. In an embodiment the first end of the support part 52 may be arranged to the hinge 58 by welding. In an embodiment the first end 53 of the support part 52 may be arranged to the hinge by fixing members, like by bolts and nuts of a bolt joint. In an embodiment between the support part 52 and the movable surface part 51 may be arranged a second joint, such as a second hinge 59. In an embodiment the first end 53 of the support part is arranged on structures of the dump box to a level that is a distance from a level of the lower surface 32 of the interior surface of the dump box 3.

In an embodiment of the arrangement 50 the support part 52 may be arranged to the inner surface 31 of the dump box that is at a distance from the pivoting axis 37 of the dump box 3 and extending upwards from the level of the lower surface 32 of the dump box. In an embodiment the support part 52 may be arranged to a front wall 35 of the dump box. In an embodiment the support part 52 may be arranged to a wall extending from the lower surface 32 the dump box. In an embodiment the arrangement 50 may be arranged movably from a first position, in which the second end 54 of the support part 52 is adjacent to inner surface 31 of the dump box 3, and possible in contact with the inner surface 31, to the second position in which the second end 54 of the support part 52 is at a distance from the inner surface 31 of the dump box.

In an embodiment at least a portion, such as first portion 51', of the movable surface part 51 of the arrangement 50 may be arranged in a first position be adjacent to the inner surface of the interior surface 31 of the dump box. In an embodiment the at least a portion, such as first portion 51', of the movable surface part 51 of the arrangement 50 may be arranged in a first position be adjacent to the lower surface 32 of the dump box.

In an embodiment a shape of the support part 52 may be arranged in accordance with shapes of the dump box interior. In an embodiment a shape of the movable surface part 51 may be arranged in accordance with shapes of the dump box interior. In an embodiment the movable surface part 51 may be arranged to extend substantially to a width of the interior of the dump box. In an embodiment the movable surface part may be arranged to extend only to partial width of the interior of the dump box. In an embodiment in which the pivot axis of the dump box is in the main moving direction of the vehicle the movable surface part may be arranged to extend substantially to a length of the interior of the dump box. In an embodiment the movable surface part may be arranged to extend only to partial length of the interior of the dump box.

In an embodiment the support part 52 may be arranged to pivot in relation to the pivot axis 55 the hinge 58 arranged between the support structures of the dump box and the first end 53 of the support part 52. In an embodiment the support part 52 may be arranged movably from the first position (Fig 4) to the second position (Fig 5 and Fig 6) at least when the dump box is tipped. In an embodiment the support part 52 may be arranged movably from the first position to the second position when the dump box is tipped for dumping the payload. In an embodiment the support part 52 may be moved from the first position to the second position by force of gravity. In an embodiment the support part may be moved from the first position to the second position by a moving device 43. In an embodiment the support part may be moved with gravitational force and/or by the moving device. In an embodiment the moving device 43 (in fig 6) may be a spring device. In an embodiment the moving device may be an actuator. In an embodiment the arrangement may be comprise a moving device and/or a vibrating device for enhancing a movement of the movable surface part or enhancing a releasing efficiency of the arrangement of stuck material, i.e. "carryback", from the dump box.

In an embodiment the movable surface part 51 may be connected to the second end 54 of the support part 52. In an embodiment the movable surface part 51 may be a plate part pivotally connected to the second end 54 of the support part 52. In an embodiment a hinge 59 may be arranged to a second end 54 of the support part 52 and a first end 56 of the movable surface part 51 is connected to the hinge 59 to pivot in relation the pivot axis of the hinge 59. In an embodiment the second end 57 of the movable surface part 51 may be arranged to connect to the inner surface 31 of the dump box. In an embodiment the movable surface part 51 may be arranged to sweep at least a portion of the interior surface 31 of the dump box when the movable surface part 51 is moved from the first position to the second position. In an embodiment the movable surface part 51 may be arranged to sweep at least a portion of the interior surface 31 of the dump box when the dump box is tipped for dump the payload. The movable surface part 51 may be arranged to extend to slide along a portion of the interior surface of the interior surface of the dump box when the movable surface part is moved from a first position to the second position. In an embodiment when the dump box is tipped, for example to pivot an angle α in relation to the pivot axis 37 the support part 52 may be arranged to pivot an angle β in relation to a support structure or a surface of the wall 312 of the dump box interior 31. In an embodiment in which the movable surface part 51 is a part of the interior of the dump box an opening 42 may formed in the interior surface. The movable surface part may be arranged to cover the opening 42 in a first position. In a second position of the movable surface part the opening 42 may be arranged to be open i.e. not covered by the movable surface part 51. Part of material may be removed from the dump box via said opening 42. This option is illustrated purely optional in Figs 5 and 5a. This may further help in releasing the "carryback" and removal of material from the dump box.

In an embodiment of figures 7 and 8 the arrangement may have a support part formed from a plurality of support members 52'. The first end 53' of the support member 52' may be arranged to the structures of a dump box. The second end 54' of the support members may be arranged to a first end of the movable surface member 51. In an embodiment the support members 53' may be arranged of stiff members. Then support members 53' may be arranged to pivot in relation to a pivot axis 55, for example by a pivot joint, such as with a hinge. In an embodiment of the arrangement in case of stiff support members the movable surface part 51 may be arranged to pivot in relation to second end of the support member, by a pivot joint, such as by a hinge. In an embodiment in which support part of support members 52' are flexible or bendable parts, the connection between the structures of the dump box and support part or support members may be made without a pivotable joint, such as a hinge, but simply connecting a first end 53, 53' of the support part to the structures of the dump box and the second end 54, 54'of the support part /members 52, 52' to the first end 56 of the surface part 51.

In an embodiment the surface part may be made of metal. In an embodiment the surface part may be made of steel. In an embodiment the surface part may be made of wear-resistant steel. In an embodiment the surface part may be made of wear-resistant material. In an embodiment the surface part may be made of wear resistant composite material. In an embodiment the surface part may be made of rubber. In an embodiment the support part may be made of may be made of metal. In an embodiment the support part may be made of steel. In an embodiment the support part part may be made of wear-resistant steel. In an embodiment the support part may be made of wear-resistant material. In an embodiment the support part may be made of wear resistant composite material. In an embodiment the support part may be made of rubber.

In an embodiment the movable surface part and/or the support part may be made of same material as the dump box surface or structures.

In an embodiment the movable surface part may be made of low friction material. This may help moving the movable surface part from first position to the second position. In an embodiment a shape of the movable surface part may be arranged to support the material in a first position. The material weight can partly help moving the movable surface part from first position to the second position when tipping the dump box.

In an embodiment one or more of the embodiments of arrangement may be arranged to a dump box for a vehicle. In an embodiment the dump box comprising in the first position the movable surface part 51 is arranged to cover an opening 42 of the interior surface 31 of the dump box 3 and in the second position of the movable surface part 51 the opening 42 of the interior surface of the dump box is open i.e. not covered.

In an embodiment the vehicle is a mining vehicle with a dump box according to any one of the embodiments disclosed above.

It is obvious to a person skilled in the art that with the advancement of technology, the basic idea of the invention may be implemented in various ways. The invention and its embodiments are thus not limited to the examples described above, instead they may vary within the scope of the claims.

### Reference numbers

1 Mining vehicle
11 Frame
12 Wheel
13 Cab
3 Dump box
31 Interior surface of the dump box
311 Wall portion
312 Wall
313 Edge portion
314 Inclined surface portion
315 Horizontal surface portion
316 Wall
317 Central surface portion
318 Rear surface
32 Lower surface
33, 34 Side walls
35 Front wall
36 Front portion
37 Pivot axis of the dump box
38 Rear end
39 Top side
40 Middle part of the dump box
41 Actuator
42 Opening
43 Moving device
50 Carryback removal arrangement
51 Movable surface part
51' First portion of the movable surface part
51'' Second portion of the movable surface part
52 Support part
52'Support member
53 First end of the support part
54 Second end of the support part
55 Pivot axis of the arrangement
56 First end of the movable surface part
57 Second end of the movable surface part
58 Hinge
59 Second hinge
h distance
M Main moving direction

## Claims

1. A dump box arrangement (50) of a dump box (3) for releasing possible stuck material from the dump box, the dump box comprising an interior surface (31) defined by a configuration of a lower surface (32), opposite sidewalls (33, 34), and a front wall (35), wherein the dump box arrangement further comprises a movable surface part (51) arranged on the interior surface of the dump box or forming a portion of the interior surface, and that the movable surface part is arranged movably in interior of the dump box from a first position to a second position at least when the dump box is tipped and a support part (52) arranged between structures of the dump box and the movable surface part (51) for operatively engaging the movable surface part (51) to the structures of the dump box (3), wherein the movable surface part (51) is arranged pivotally movable on the support part (52) with a hinge (59);
a first end (53) of the support part (52) is arranged to be connected to a dump box structures on a level that is a distance (h) upwards in a vertical direction from a level of the movable surface part (51), and the movable support part (51) is arranged to be connected to a second end (54) of the support part (52);
**characterized in that**
an actuator (43) for moving the movable surface part(51) from the first to the second position and back is arranged to vibrate the movable surface part (51) to enhance the releasing of the material from the dump box.

2. The dump box arrangement according to claim 1, wherein the movable surface part (51) is configured to be arranged in a first position in a corner area or near a corner area of the interior of the dump box, for example a corner area of the lower surface (32) and a wall extending upwards from a lower surface.

3. The dump box arrangement according to any one of claims 1 or 2, wherein the support part (52) comprises one or more of the following: plate part, bar part, pipe part, band part, chain part, wire part, rope part, wire rope part, or spring part.

4. The dump box arrangement according to any one of claims 1 to 3, wherein the support part (52) is arranged movably on the dump box structures.

5. The dump box arrangement according to any one of claims 1 to 4, wherein the support part (52) is arranged pivotally movable on the dump box structures with a joint, for example with a hinge (58).

6. The dump box arrangement according to any one of claims 1 to 5, wherein the movable surface part (51) is arranged movably from the first position to the second position by gravity, in accordance with the dump box (3) movement, such as with the tipping movement.

7. The dump box arrangement according to any one of claims 1 to 6, wherein the support part (52) is a rigid part or the support part is a flexible part.

8. The dumb box arrangement according to any one of claims 1 to 7, wherein the arrangement comprises a plurality of support parts (52) or support members (52') and/or movable surface parts (51).

9. A dump box for a vehicle, wherein the dump box comprises a dump box arrangement according to any one of claims 1 to 8.

10. The dump box for a vehicle according to claim 9, wherein in the first position the movable surface part (51) is arranged to cover an opening (42) of the interior surface of the dump box (3) and in the second position of the movable surface part (51) the opening (42) of the interior surface of the dump box is open i.e. not covered.

11. A mining vehicle, wherein the mining vehicle comprises a dump box according to claim 9 or 10.

## Patentansprüche

1. Kippkastenanordnung (50) eines Kippkastens (3) zum Lösen von möglicherweise festsitzendem Material von dem Kippkasten, wobei der Kippkasten eine Innenfläche (31) umfasst, die durch eine Konfiguration aus einer Unterfläche (32), entgegengesetzten Seitenwänden (33, 34) und einer Vorderwand (35) definiert ist, wobei die Kippkastenanordnung weiter ein bewegbares Flächenteil (51) umfasst, das auf der Innenfläche des Kippkastens eingerichtet ist oder einen Abschnitt der Innenfläche bildet, und das bewegbare Flächenteil in dem Inneren des Kippkastens von einer ersten Position in eine zweite Position bewegbar eingerichtet ist, mindestens wenn der Kippkasten gekippt ist, sowie ein Stützteil (52), das zwischen Strukturen des Kippkastens und dem bewegbaren Flächenteil (51) eingerichtet ist, um das bewegbare Flächenteil (51) betriebswirksam mit den Strukturen des Kippkastens (3) in Eingriff zu bringen, wobei das bewegbare Flächenteil (51) mit einem Scharnier (59) schwenkbar auf dem Stützteil (52) eingerichtet ist;
ein erstes Ende (53) des Stützteils (52) dazu eingerichtet ist, mit einer Kippkastenstruktur auf einer Ebene verbunden zu sein, die sich in einem Abstand (h) nach oben in einer vertikalen Richtung von einer Ebene des bewegbaren Flächenteils (51) befindet, und das bewegbare Stützteil (51) dazu eingerichtet ist, mit einem zweiten Ende (54) des Stützteils (52) verbunden zu sein;
**dadurch gekennzeichnet, dass**
eine Betätigungsvorrichtung (43) zum Bewegen des bewegbaren Flächenteils (51) von der ersten in die zweite Position und zurück dazu eingerichtet ist, das bewegbare Flächenteil (51) vibrieren zu lassen, um das Freigeben des Materials aus dem Kippkasten zu verbessern.

2. Kippkastenanordnung nach Anspruch 1, wobei das bewegbare Flächenteil (51) dazu konfiguriert ist, in einer ersten Position in einem Eckbereich oder in der Nähe eines Eckbereichs des Inneren des Kippkasten eingerichtet zu sein, beispielsweise einem Eckbereich der Unterfläche (32) und einer Wand, die sich von einer Unterfläche nach oben erstreckt.

3. Kippkastenanordnung nach einem der Ansprüche 1 oder 2, wobei das Stützteil (52) eines oder mehrere der Folgenden umfasst: Plattenteil, Stangenteil, Rohrteil, Bandteil, Kettenteil, Drahtteil, Seilteil, Drahtseilteil oder Federteil.

4. Kippkastenanordnung nach einem der Ansprüche 1 bis 3, wobei das Stützteil (52) bewegbar an den Kippkastenstrukturen eingerichtet ist.

5. Kippkastenanordnung nach einem der Ansprüche 1 bis 4, wobei das Stützteil (52) mit einem Gelenk, beispielsweise einem Scharnier (58), schwenkend bewegbar an den Kippkastenstrukturen eingerichtet ist.

6. Kippkastenanordnung nach einem der Ansprüche 1 bis 5, wobei das bewegbare Flächenteil (51) schwerkraftbedingt von der ersten Position zu der zweiten Position gemäß der Bewegung des Kippkastens (3) wie mit der Kippbewegung bewegbar ist.

7. Kippkastenanordnung nach einem der Ansprüche 1 bis 6, wobei das Stützteil (52) ein starres Teil ist oder das Stützteil ein flexibles Teil ist.

8. Kippkastenanordnung nach einem der Ansprüche 1 bis 7, wobei die Anordnung eine Vielzahl von Stützteilen (52) oder Stützelementen (52') und/oder bewegbaren Flächenteilen (51) umfasst.

9. Kippkasten für ein Fahrzeug, wobei der Kippkasten eine Kippkastenanordnung nach einem der Ansprüche 1 bis 8 umfasst.

10. Kippkasten für ein Fahrzeug nach Anspruch 9, wobei das bewegbare Flächenteil (51) in der ersten Position dazu eingerichtet ist, eine Öffnung (42) der Innenfläche des Kippkastens (3) abzudecken, und in der zweiten Position des bewegbaren Flächenteils (51) die Öffnung (42) der Innenfläche des Kippkastens offen, d. h. nicht abgedeckt ist.

11. Bergbaufahrzeug, wobei das Bergbaufahrzeug einen Kippkasten nach Anspruch 9 oder 10 umfasst.

## Revendications

1. Agencement de benne de déchargement (50) d'une benne de déchargement (3) pour libérer d'éventuels matériaux coincés de la benne de déchargement, la benne de déchargement comprenant une surface intérieure (31) définie par une configuration d'une surface inférieure (32), de parois latérales opposées (33, 34) et d'une paroi avant (35), dans lequel l'agencement de benne de déchargement comprend en outre une partie de surface mobile (51) agencée sur la surface intérieure de la benne de déchargement ou formant une partie de la surface intérieure, et que la partie de surface mobile est agencée de manière mobile à l'intérieur de la benne de déchargement d'une première position à une seconde position au moins lorsque la benne de déchargement est basculée et une partie de support (52) agencée entre les structures de la benne de déchargement et la partie de surface mobile (51) pour engager fonctionnellement la partie de surface mobile (51) aux structures de la benne de déchargement (3), dans lequel la partie de surface mobile (51) est agencée de manière pivotante mobile sur la partie de support (52) avec une charnière (59) ;
une première extrémité (53) de la partie de support (52) est agencée pour être connectée à une structure de benne de déchargement sur un niveau qui est à une distance (h) vers le haut dans une direction verticale à partir d'un niveau de la partie de surface mobile (51), et la partie de support mobile (51) est agencée pour être connectée à une seconde extrémité (54) de la partie de support (52) ;
**caractérisé en ce que**
un actionneur (43) permettant de déplacer la partie de surface mobile (51) de la première à la seconde position et inversement est agencé pour faire vibrer la partie de surface mobile (51) afin d'améliorer la libération du matériau de la benne de déchargement.

2. Agencement de benne de déchargement selon la revendication 1, dans lequel la partie de surface mobile (51) est configurée pour être agencée dans une première position dans une zone d'angle ou à proximité d'une zone d'angle de l'intérieur de la benne de déchargement, par exemple une zone d'angle de la surface inférieure (32) et une paroi s'étendant vers le haut à partir d'une surface inférieure.

3. Agencement de benne de déchargement selon l'une quelconque des revendications 1 ou 2, dans lequel la partie de support (52) comprend un ou plusieurs des éléments suivants : partie de plaque, partie de barre, partie de tuyau, partie de bande, partie de chaîne, partie de fil, partie de corde, partie de câble métallique ou partie de ressort.

4. Agencement de benne de déchargement selon l'une quelconque des revendications 1 à 3, dans lequel la partie de support (52) est agencée de manière mobile sur les structures de benne de déchargement.

5. Agencement de benne de déchargement selon l'une quelconque des revendications 1 à 4, dans lequel la partie de support (52) est agencée de manière pivotante et mobile sur les structures de benne de déchargement à l'aide d'une articulation, par exemple à l'aide d'une charnière (58).

6. Agencement de benne de déchargement selon l'une quelconque des revendications 1 à 5, dans lequel la partie de surface mobile (51) est agencée de manière mobile de la première position à la seconde position par gravité, conformément au mouvement de la benne de déchargement (3), tel qu'avec le mouvement de basculement.

7. Agencement de benne de déchargement selon l'une quelconque des revendications 1 à 6, dans lequel la partie de support (52) est une partie rigide ou la partie de support est une partie flexible.

8. Agencement de benne de déchargement selon l'une quelconque des revendications 1 à 7, dans lequel l'agencement comprend une pluralité de pièces de support (52) ou d'éléments de support (52') et/ou des parties de surface mobiles (51).

9. Benne de déchargement pour véhicule, dans laquelle la benne de déchargement comprend un agencement de benne de déchargement selon l'une quelconque des revendications 1 à 8.

10. Benne de déchargement pour véhicule selon la revendication 9, dans laquelle dans la première position la partie de surface mobile (51) est agencée pour recouvrir une ouverture (42) de la surface intérieure de la benne de déchargement (3) et dans la seconde position de la partie de surface mobile (51) l'ouverture (42) de la surface intérieure de la benne de déchargement est ouverte, c'est-à-dire non recouverte.

11. Véhicule minier, dans lequel le véhicule minier comprend une benne de déchargement selon la revendication 9 ou 10.
